# EUROPEAN PATENT SPECIFICATION

(11) **EP 2 772 974 B1**
(45) Date of publication and mention of the grant of the patent: **22.02.2017**
(21) Application number: 12843160.8
(22) Date of filing: 17.10.2012
(51) Int. Cl.: H01M 8/0232, H01M 8/0245, H01M 8/124, H01M 8/00, C25D 5/12, C25D 5/50, C25D 7/00

(54) **POROUS CURRENT COLLECTOR, METHOD FOR MANUFACTURING SAME, AND FUEL CELL THAT USES POROUS CURRENT COLLECTOR**
PORÖSER STROMKOLLEKTOR, HERSTELLUNGSVERFAHREN DAFÜR UND BRENNSTOFFZELLE MIT PORÖSEM STROMKOLLEKTOR
COLLECTEUR DE COURANT POREUX, PROCÉDÉ POUR SA FABRICATION ET PILE À COMBUSTIBLE UTILISANT LE COLLECTEUR DE COURANT POREUX

(30) Priority: 27.10.2011 JP 2011235815
(43) Date of publication of application: 03.09.2014
(73) Proprietor: Sumitomo Electric Industries, Ltd., Chuo-ku Osaka-shi Osaka 541-0041 (JP)
(72) Inventor: OKUNO, Kazuki, Hyogo 664-0016 (JP); HIRAIWA, Chihiro, Hyogo 664-0016 (JP); MAJIMA, Masatoshi, Hyogo 664-0016 (JP)
(74) Representative: Hoffmann Eitle
(86) International application number: PCT/JP2012/076822
(87) International publication number: WO 2013/061841

(56) References cited:
- JP-A- H04 280 074
- JP-A- H08 225 865
- JP-A- 2003 331 859
- JP-A- 2003 528 980
- JP-A- 2009 187 887
- US-A1- 2003 124 413
- US-A1- 2010 086 824

## Description

### Technical Field

The present invention relates to a porous current collector; in particular, to a porous current collector that can exhibit durability in the case of being applied to, for example, a fuel cell operated at a high temperature.

### Background Art

Among fuel cells, a solid oxide fuel cell (hereafter, referred to as SOFC) includes a solid electrolyte layer formed of a solid oxide and electrode layers laminated so as to sandwich the solid electrolyte layer therebetween.

The SOFC needs to be operated at a high temperature, compared with a polymer electrolyte fuel cell (PEFC) and a phosphoric acid fuel cell (PAFC). Since the SOFC can be operated at high efficiency and can employ biofuel or the like, it is attracting attention in these years.

In the SOFC, in the cathode electrode (air electrode), the following reaction occurs:

1/2O₂ + 2e⁻ → O²⁻

On the other hand, in the anode electrode (fuel electrode), the following reaction occurs:

H₂ + O²⁻ → H₂O + 2e⁻

For each of the electrodes, a current collector is disposed so that the electrons are collected and made to flow smoothly. The current collector is preferably formed of a conductive porous material having a high porosity so that it has a high conductivity and does not hamper the mobility of the air or a fuel gas.

In general, the SOFC is operated at a high temperature of 600°C to 1000°C. In addition, since oxygen ions O²⁻ are generated in the cathode electrode, the current collector on the cathode-electrode side is exposed to a very strong oxidizing environment. Accordingly, the current collector is required to have high heat resistance and high oxidation resistance. To satisfy this requirement, noble metals such as Pt and Ag and metals such as Ni-Cr, Ni-Co, and inconel are often used.

Patent Literatures 2 and 3 disclose current collectors for fuel cells comprising a Ni layer. In contrast, Patent Literature 4 discloses a current collector for a solid electrolyte fuel cell comprising a NiSn alloy layer, wherein the Sn content is at least 33 % by weight.

### Citation List

### Patent Literature

[PTL 1] Japanese Patent No. 4562230
[PTL 2] US 2003-124413 A1
[PTL 3] US 2010-086824 A1
[PTL 4] JP 45622330 B

### Summary of Invention

### Technical Problem

In the cases of noble metals, NiCo, and inconel, the production cost becomes high due to resource problems. On the other hand, although Ni-Cr is excellent in terms of heat resistance and oxidation resistance, it releases Cr at high temperatures to cause poisoning of the electrode and the electrolyte so that degradation of the performance of the fuel cell may be caused.

As the current collector, a porous body that has a low flow resistance to the air or gases is desirably employed. Since such a porous body is exposed to high temperatures, it needs to have required mechanical strength and durability at high temperatures. However, when the porosity is increased in order to decrease the flow resistance, the mechanical strength at high temperatures is degraded, which is problematic.

An object of the present invention is to provide a porous current collector that can overcome such problems: the porous current collector can be produced at a low cost, has high heat resistance and high oxidation resistance, has a required mechanical strength, and, even in the case of being used in a fuel cell operated at a high temperature, can exhibit high durability.

### Solution to Problem

The present invention relates to a porous current collector used in a fuel cell including a solid electrolyte layer, a first electrode layer disposed on a side of the solid electrolyte layer, and a second electrode layer disposed on another side of the solid electrolyte layer, the porous current collector including continuous pores and a Ni-Sn alloy layer covering at least a surface of the porous current collector, wherein the Sn content in the Ni-Sn alloy layer is 5% to 30% by weight.

A Ni-Sn alloy serves as a good conductor. In addition, an oxide film SnO₂ formed in the surface serves as a barrier layer against permeation of oxygen into the underlying layer to thereby suppress growth of the surface oxide layer. Since the oxide film SnO₂ has conductivity to a degree, while it serves as a barrier layer suppressing growth of the oxide layer, conductivity as a porous current collector can be ensured. Accordingly, the porous current collector can function as a conductor in an oxidizing atmosphere at a high temperature. Since growth of the oxide film is suppressed, the porous current collector also has high durability.

Thus, in one embodiment according to the present invention, the following configuration is desirably employed: a Sn oxide film having conductivity and having a thickness of 10nm or more is formed in a surface of the alloy layer in an oxidizing atmosphere at a high temperature of 600°C or more; for example, in the case of a current collector for a SOFC, the oxide film is desirably formed in a temperature range of 600°C to 1000°C. Prior to the use, the porous metal body having the configuration may be subjected to an electrolytic oxidation treatment in a solution to form an oxide film to thereby enhance corrosion resistance. For example, such a treatment may be performed by linear sweep voltammetry: specifically, potentials in a wide range are once applied to a sample and a potential providing a high current value is determined; the potential providing a high current value is subsequently applied until the current becomes sufficiently low.

According to the present invention, the Sn content is in the range of 5% to 30% by weight. More preferably, the Sn content may be made 10% to 25% by weight. When the content is less than 5% by weight, oxidation resistance in a high-temperature oxidizing atmosphere cannot be ensured. On the other hand, when the content is more than 30% by weight, the proportion of a brittle alloy layer increases, resulting in decrease in the compressive strength of the base. When the time for which the porous current collector is disposed in the cell of a fuel cell becomes long, a decrease in the thickness results in degradation of a property of contact with the current collector and the like and performance of the fuel cell may be degraded. In addition to the Ni component and the Sn component, 10% or less by weight of a phosphorus component is preferably added. To add the phosphorus component, an additive containing phosphorus may be added in the formation of the Ni-Sn alloy layer. For example, after a Ni layer is formed by electroless nickel plating, a hypophosphorous-acid-based material is used as a reducing agent to thereby add the phosphorus component. As a result, the electrolytic resistance and corrosion resistance can be further enhanced. Note that a high phosphorus content causes degradation of heat resistance and hence the phosphorus content is made 10% or less by weight.

The process for producing the porous current collector is not particularly limited. For example, the porous current collector may be formed by forming a Ni-Sn alloy layer on the surface of a porous base formed of a conductive metal or a ceramic. The process for forming the Ni-Sn alloy layer is also not limited.

For example, the Ni-Sn alloy layer may be formed by forming, on the surface of the porous base, a coating layer containing a Ni powder and a Sn powder or a coating of a Ni-Sn alloy powder, and subsequently firing the coating layer or the coating. Alternatively, in another embodiment according to the present invention, the Ni-Sn alloy layer may be formed by forming a Sn layer on a Ni layer and subsequently heating the Ni layer and the Sn layer to cause diffusion therebetween. Alternatively, the Ni-Sn alloy layer may be formed by employing a porous base formed of a Ni-Cr alloy, forming a Sn layer on the surface of the base, and subsequently causing diffusion between the Ni layer and the Sn layer through heating.

Ni oxide films have oxygen permeability and low conductivity. Accordingly, when a Ni oxide film covers the surface of the current collector, the function of the current collector may be degraded and the durability may also be degraded. For this reason, the content of the Sn component is preferably made high at least on the surface side.

When a Sn layer is formed on a Ni layer, and the Ni layer and the Sn layer are subsequently heated to diffuse therebetween, the content of the Sn component can be made high on the surface side. Thus, a Ni-Sn alloy layer having a high content of the Sn component can be formed over the entire surface of the porous current collector. As to the content of the Sn component in the near-surface region, the content of the Sn component in the region from the surface to the depth of about 5 µm is preferably made 5% or more by weight, more preferably 10% or more by weight.

A current collector used in a SOFC is required to have, in addition to the above-described oxidation resistance, a high porosity for the purpose of not hampering flow of a fuel gas or the air, and a high mechanical strength at a high usage temperature. Accordingly, in another embodiment according to the present invention, the porous current collector preferably has a porosity of 50% to 98%; and when the porous current collector is heated in the air at 600°C or more and a load of 30 Kgf/cm² is subsequently applied to the porous current collector at room temperature, variation in a thickness of the porous current collector is preferably less than 30%.

In this case, strength can be ensured in the case of high-temperature operation.

In another embodiment according to the present invention, the porous current collector includes a skeleton including a shell portion including the Ni-Sn alloy layer at least in a surface of the shell portion, and a core portion including a hollow portion and/or a conductive material, wherein the skeleton forms a three-dimensional network structure having an integrated continuous form.

In the porous current collector, the skeleton forms a three-dimensional network structure and hence a very high porosity can be achieved. As a result, the flow resistance to the gas in pores becomes low and a large amount of the gas can be made to flow to the electrode and efficient current collection can be achieved. In addition, the skeleton has an integrated continuous form. Accordingly, a high strength can be ensured even in a high-temperature usage environment.

A porous current collector according to the present invention is applicable to fuel cells of various types. In particular, the porous current collector may be employed as a current collector for a cathode electrode in a SOFC operated at a high temperature.

A process for producing a porous current collector according to the present invention is not particularly limited. For example, a Ni-Sn alloy layer may be formed by a plating process or the like on the surface of a porous metal body having heat resistance at the usage temperature to thereby form a porous current collector. The form of the porous body is also not particularly limited. For example, a porous current collector having a mesh structure can be formed.

Another embodiment according to the present invention is a method for producing a porous current collector including, at least in a surface, a Ni-Sn alloy layer in which a Sn content in the Ni-Sn alloy layer is 5% to 30% by weight, the method including a Ni-plated-layer formation step of forming a Ni-plated layer on a porous base; a Sn-plated-layer formation step of forming a Sn-plated layer on the Ni-plated layer; a base elimination step of eliminating the porous base in an atmosphere at least containing oxygen; and a diffusion step of causing diffusion between the Ni-plated layer and the Sn-plated layer in a reducing atmosphere at a temperature of 300°C to 1100°C. Note that the Ni-plated-layer formation step may be followed by the base elimination step; and a step of reducing the Ni-plated layer may be additionally performed and followed by the Sn-plated-layer formation step and the diffusion step.

The porous base may be the three-dimensional-network resin. Examples of the three-dimensional-network resin include resin foam, nonwoven fabric, felt, and woven fabric that are formed of urethane or the like.

When a porous resin foam is used as the porous base, prior to the Ni-plated-layer formation step, a surface conductive layer composed of Ni or the like is desirably formed by an electroless plating treatment, a sputtering treatment, or the like. By disposing the surface conductive layer, a Ni-plated layer can be uniformly formed over the surface of the porous base.

The process for forming the Ni-plated layer is also not particularly limited and a known plating process such as an aqueous-solution-based plating process may be performed. The Sn-plated layer may also be formed by a similar process. The thicknesses of the Ni-plated layer and the Sn-plated layer are determined in accordance with the contents of Ni and Sn forming the Ni-Sn layer. For example, the thickness ratio of the Ni-plated layer to the Sn-plated layer may be made 8:2.

In the present invention, the diffusion step is preferably performed by conducting a heat treatment at a temperature of 300°C to 1100°C so that intermetallic compounds are not generated at the interface between the Ni layer and the Sn layer before diffusion between the Ni-plated layer and the Sn-plated layer sufficiently occurs. By conducting the treatment in the temperature range, generation of intermetallic compounds at the interface can be suppressed and a near-surface region having a high Sn content can be formed. For example, a heat treatment is preferably conducted such that the content of the Sn component in a region from the surface to the depth of about 5 µm is made to be 5% or more by weight, more preferably 10% or more by weight.

By such a process, the surface of a porous current collector exposed to a high-temperature oxidizing atmosphere can be made to have at least a required content of the Sn component, and a Sn oxide layer is formed in the surface of the porous current collector in a high-temperature usage environment. Accordingly, the function of the current collector can be ensured for a long period of time.

### Advantageous Effects of Invention

A porous current collector can be provided that can be produced at a low cost, has high heat resistance and high oxidation resistance, has a required mechanical strength, and, in the case of being used in a fuel cell operated at a high temperature, can exhibit high durability.

### Brief Description of Drawings

[Fig. 1] Figure 1 is an electron micrograph illustrating the external structure of a porous current collector according to the present invention.
[Fig. 2] Figure 2 is a schematic sectional view of the porous current collector illustrated in Fig. 1.
[Fig. 3] Figure 3 is a sectional view taken along line III-III in Fig. 2.
[Fig. 4] Figure 4 is a schematic sectional view of a fuel cell according to the present invention.
[Fig. 5] Figure 5 is a longitudinal sectional view of a main portion of the fuel cell illustrated in Fig. 4.
[Fig. 6] Figure 6 is a sectional view taken along line IB-IB in Fig. 5.
[Fig. 7] Figure 7 schematically illustrates actions of the fuel cell illustrated in Fig. 5. Description of Embodiments

Embodiments of the present invention will be specifically described with reference to the drawings. Hereinafter, the present embodiment related to a porous current collector having a three-dimensional network structure will be described. However, the porous current collector is not limited to the form described below. Porous current collectors having other forms such as a mesh sheet may be provided.

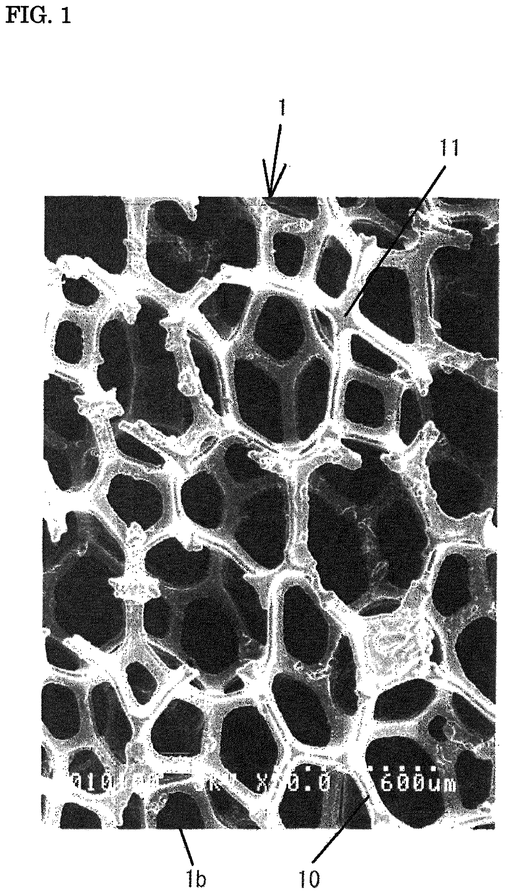

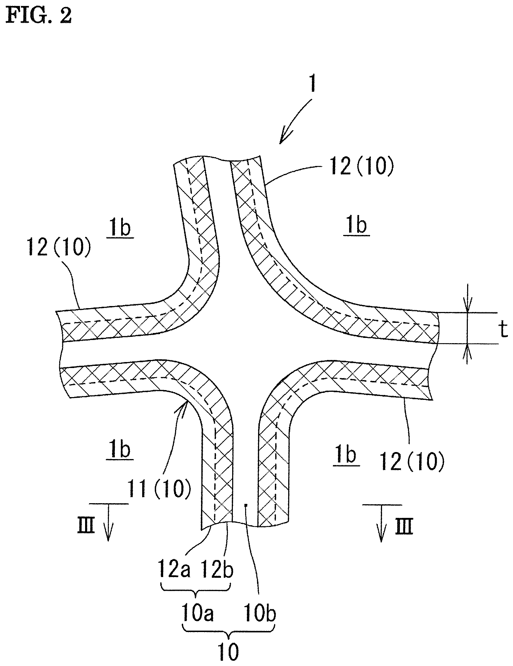

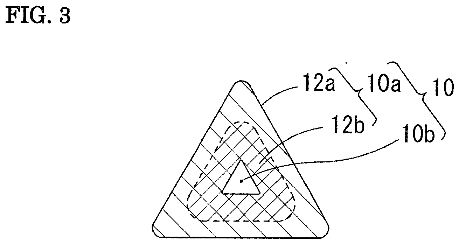

Figure 1 is an electron micrograph illustrating the external structure of a porous current collector 1 according to the present embodiment. The porous current collector 1 has a three-dimensional network structure including continuous pores 1b. As illustrated in Figs. 2 and 3, the three-dimensional network structure has a form in which a triangular-prism-shaped skeleton 10 three-dimensionally continuously extends: a plurality of branch portions 12 constituting the skeleton 10 meet at node portions 11 to provide an integrated continuous form. As illustrated in Fig. 3, portions of the skeleton 10 include a shell portion 10a and a core portion 10b that is hollow. As described below, in the shell portion 10a in the embodiment illustrated in Figs. 2 and 3, a Ni-plated layer 12b and a Sn-plated layer 12a are integrally alloyed to function as the current collector 1.

The porous current collector 1 is formed as a porous form having the continuous pores 1b. Accordingly, a fuel gas and the like can be made to flow through the pores 1b to reach electrodes, and current collection can be efficiently achieved. In addition, the porous current collector 1 has the three-dimensional network structure and, as a result, can have a very high porosity. Thus, the flow resistance to the gas in the pores is low and a large amount of the gas can be made to flow, resulting in an increase in power-generation efficiency.

As illustrated in Fig. 2, in the three-dimensional network structure, the shell portion 10a is formed so as to have substantially the same thickness t in the node portion 11 and in the branch portions 12 meeting at the node portion 11. Thus, the porous body has a uniform mechanical strength on the whole. As a result, even when the porous body is applied to a current collector of a SOFC used under a high-temperature environment, a required strength can be ensured.

For example, the porous body is preferably a porous body in which the porosity is 50% to 98% and, when the porous body is heated in the air atmosphere at 600°C or more and a load of 30 Kgf/cm² is subsequently applied to the porous body at room temperature, variation in the thickness of the porous body is less than 30%.

The porous current collector 1 according to the present embodiment is formed of an alloy containing Ni (nickel) and Sn (tin) (hereafter referred to as a Ni-Sn alloy). The contents of Ni and Sn can be determined in accordance with, for example, the operation temperature. The shell portion 10a is formed so as to contain at least 5% to 30% by weight of Sn, preferably 10% to 25% by weight of Sn. Furthermore, in addition to the Ni component and the Sn component, 10% or less by weight of a phosphorus component is preferably added. To add the phosphorus component, an additive containing phosphorus may be added in the formation of the Ni-Sn alloy layer. For example, after a Ni layer is formed by electroless nickel plating, a hypophosphorous-acid-based material is used as a reducing agent to thereby add the phosphorus component. As a result, the electrolytic resistance and corrosion resistance can be further enhanced. Note that a high phosphorus content causes degradation of heat resistance and hence the phosphorus content is made 10% or less by weight.

The porous current collector 1 can be formed by various processes. For example, the surface of a porous base is directly coated with a Ni-Sn alloy material that is to constitute the porous current collector, and the material is fired to form the Ni-Sn alloy layer.

Alternatively, steps may be performed that include a step of subjecting a three-dimensional-network resin porous base to a conductive treatment to form a surface conductive layer; a Ni-plated-layer formation step of forming a Ni-plated layer on the conductive layer; a Sn-plated-layer formation step of forming a Sn-plated layer on the Ni-plated layer; a base elimination step of eliminating the resin porous base in an atmosphere at least containing oxygen; and a diffusion step of causing diffusion and alloying between the Ni-plated layer and the Sn-plated layer in a reducing atmosphere at a temperature of 300°C to 1100°C. Note that the Ni-plated-layer formation step may be followed by the base elimination step; and a step of reducing the Ni-plated layer oxidized in the base elimination step may be performed and followed by the Sn-plated-layer formation step and the diffusion step.

Examples of the form of the three-dimensional-network resin include resin foam, nonwoven fabric, felt, and woven fabric. The material forming the three-dimensional-network resin is not particularly limited but is preferably a material that can be eliminated by heating or the like performed, for example, after being plated with metal. The resin preferably has flexibility in order to ensure processability and handleability. In particular, the three-dimensional-network resin is preferably a resin foam. The resin foam should be a porous foam having continuous pores and may be a known foam. For example, a urethane-resin foam, a styrene-resin foam, or the like may be employed. For example, the form of pores, porosity, and dimensions of the resin foam are not particularly limited and can be appropriately determined in accordance with applications.

In the case of forming the porous current collector 1 by a plating treatment, the step of forming the surface conductive layer is performed so that the Ni-plated layer can be formed on the surfaces of pores of the three-dimensional-network resin with certainty. As long as the surface conductive layer required for the Ni-plating treatment can be formed, the formation process is not particularly limited. For example, to form a surface conductive layer composed of Ni, an electroless plating treatment, a sputtering treatment, or the like may be employed. Alternatively, to form a surface conductive layer composed of a metal such as titanium or stainless steel, carbon black, or graphite, a step of impregnating and coating the three-dimensional-network resin with a mixture prepared by mixing a fine powder of the foregoing with a binder may be performed.

The process for forming the Ni-plated layer 12b and the Sn-plated layer 12a is also not particularly limited and a known plating process such as an aqueous-solution-based plating process may be performed.

The whole thickness (weight) of the Ni-Sn alloy plated layer is not particularly limited and may be determined in accordance with required porosity or strength. For example, a weight of 100 g/m² to 2000 g/m² may be employed.

Depending on the Ni content and the Sn content, the thicknesses of the Ni-plated layer 12b and the Sn-plated layer 12a are determined. For example, when the content ratio Ni:Sn is 8:2, the thicknesses (weights) of the plated layers can be determined as 800 g/m² (Ni):200 g/m² (Sn).

When the surface conductive layer is formed of Ni, the thicknesses of the plated layers are preferably determined such that the content ratio of Ni to Sn in the Ni-Sn alloy layer 10a becomes the above-described ratio after the diffusion step.

After the Ni-plated layer 12b and the Sn-plated layer 12a are formed or after the Ni-plated layer 12b is formed, the base elimination step of eliminating the three-dimensional-network resin is performed. For example, the base elimination step may be performed in the following manner: the porous body having such a plated layer is heated at a predetermined temperature in an oxidizing atmosphere such as the air within a stainless-steel muffle to thereby eliminate the three-dimensional-network resin through incineration.

As illustrated in Figs. 2 and 3, the core portion 10b according to the present embodiment is formed so as to be hollow; however, this is not limitative. Specifically, in the above-described embodiment, the surface conductive layer (not shown) formed of Ni and the Ni-plated layer 12b and the Sn-plated layer 12a that are formed thereon diffuse into one another to thereby be integrated; however, when the surface conductive layer is formed of another conductive material, it may remain as a core portion. For example, when the surface conductive layer is formed of titanium, carbon, or the like and the shell portion is formed of a Ni-Sn alloy layer, the surface conductive layer is not alloyed and remains as a core portion. There is another case where, in the heating step, the shell portion shrinks to eliminate the core portion 10b that is hollow.

A porous body in which the Sn-plated layer and the Ni-plated layer are stacked may be heated at 300°C to 1100°C in a reducing gas atmosphere such as CO or H₂ within a stainless-steel muffle so that the Ni-plated layer 12b and the Sn-plated layer 12a diffuse into each other to form the shell portion 10a formed of a Ni-Sn alloy layer. Alternatively, in an inert gas atmosphere such as N₂ or Ar, heating may be performed at 300°C to 1100°C within a carbon muffle so that diffusion between the Ni-plated layer 12b and the Sn-plated layer 12a is caused to form the shell portion 10a formed of the alloy layer. The thickness of the shell portion 10a formed of the Ni-Sn alloy layer is preferably made 1 µm to 10 µm.

By employing the above-described steps, the porous current collector 1 in which variations in Sn concentration are small in the shell portion 10a and the oxidation resistance at high temperatures is high can be formed. Since the shell portion is constituted by plated layers, the thickness (cross-sectional area) of the shell portion can be made substantially uniform in the porous body. Accordingly, variations in the mechanical strength of the porous body are reduced and a porous current collector having a uniform strength can be formed. Thus, even when it is employed as a current collector of a SOFC required to have heat resistance and mechanical strength, durability can be ensured.

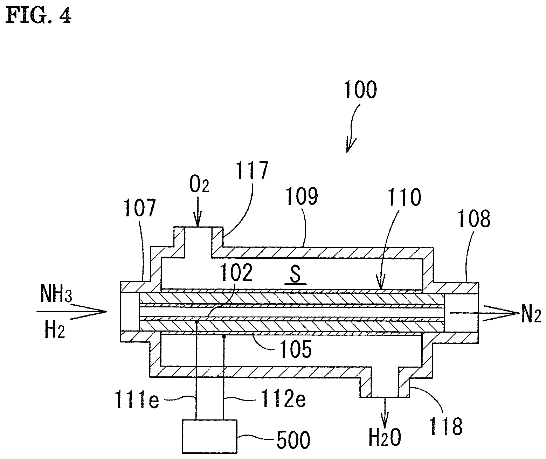

Figure 4 illustrates a schematic sectional view of a fuel cell 100 employing the above-described porous current collector 1. In the fuel cell 100 according to the present embodiment, the porous current collector 1 according to the present invention is applied to the fuel cell 100 including a cylindrical membrane electrode assembly (MEA) 110 having a cylindrical form.

The fuel cell 100 includes the cylindrical MEA 110 inside of which a fuel gas is made to flow and is decomposed, and a cylindrical container 109 that holds the cylindrical MEA 110 and allows air flow in the outer circumferential portion of the cylindrical MEA 110.

The cylindrical MEA 110 is held in the cylindrical container 109 such that it is connected between a gas inlet 107 and a gas outlet 108 of the cylindrical container 109. In the outer circumferential portion of the cylindrical container 109, there are an air inlet 117 through which the air is introduced and an outlet 118 through which the air flowing in the outer circumferential portion of the cylindrical MEA 110 and generated water are discharged.

A heater (not shown) is disposed in the outer circumferential portion of the fuel cell 100 and it can heat at 600°C to 1000°C the cylindrical MEA 110 and a space S in which the air flows. Wires 111e and 112e are provided between a first electrode layer (anode electrode) 102 and a second electrode layer 105 (cathode electrode) of the cylindrical MEA 110. Within these wires, a storage unit 500 or a load is provided.

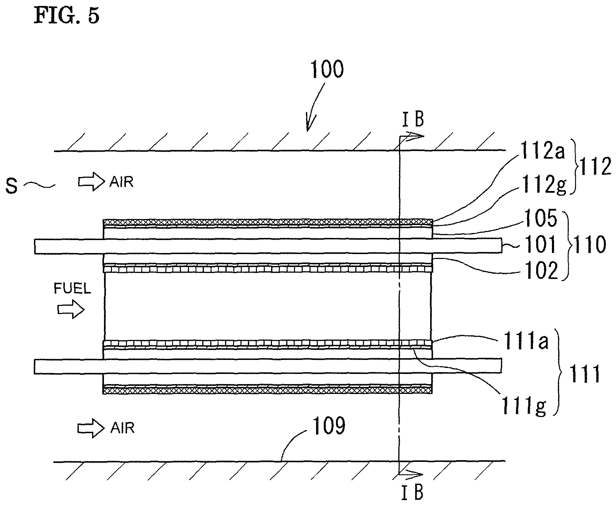

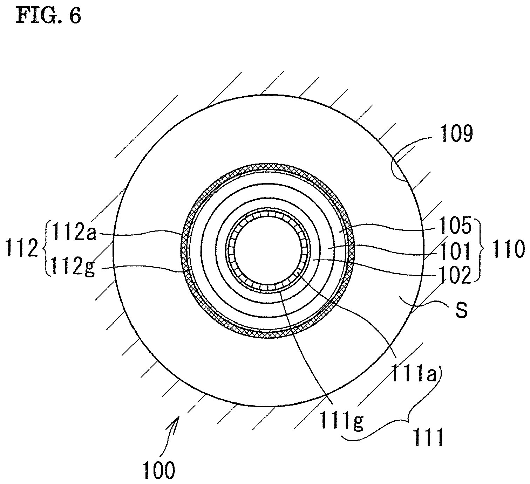

Figure 5 illustrates an enlarged sectional view of a main portion of the fuel cell 100 in Fig. 4. Figure 6 is a sectional view taken along line IB-IB in Fig. 5.

The cylindrical MEA 110 includes a cylindrical solid electrolyte layer 101, the first electrode layer (anode electrode) 102 formed so as to cover the inner surface of the solid electrolyte layer 101, and the second electrode layer (cathode electrode) 105 formed so as to cover the outer surface of the solid electrolyte layer 101. Current collectors 111 and 112 are disposed for the first electrode layer (anode electrode) 102 and the second electrode layer (cathode electrode) 105. The first electrode layer (anode electrode) 102 is referred to as a fuel electrode. The second electrode layer (cathode electrode) 105 is referred to as an air electrode. Although the cylindrical MEA 110 (101, 102, 105) is employed in the present embodiment, this is not limitative. A MEA including a plate-shaped solid electrolyte layer may be employed to constitute a fuel cell. In addition, dimensions and the like can be determined in accordance with an apparatus to which the MEA is applied.

The anode-side current collector 111 includes a silver-paste-coated layer 111g and a Ni mesh sheet 111a. The Ni mesh sheet 111 a is in contact with the first electrode layer (anode electrode) 102 with the silver-paste-coated layer 111g therebetween so that the Ni mesh sheet 111a is electrically connected to the storage battery 500 and the like, the first electrode layer (anode electrode) 102 being disposed on the inner-surface side of the cylindrical MEA 110. To decrease the electric resistance between the first electrode layer (anode electrode) 102 and the Ni mesh sheet 111a, the silver-paste-coated layer 111 g is disposed.

The cathode-side current collector 112 includes a silver-paste-coated wiring 112g and a sheet-shaped porous current collector 112a formed of the porous current collector 1 illustrated in Fig. 1. The silver-paste-coated wiring 112g decreases the electric resistance between the sheet-shaped porous current collector 112a and the second electrode layer (cathode electrode) 105. In addition, the silver-paste-coated wiring 112g allows passing of oxygen molecules therethrough and contact of silver particles with the second electrode layer (cathode electrode) 105 so that catalysis similar to that provided by silver particles contained in the second electrode layer (cathode electrode) 105 is exhibited.

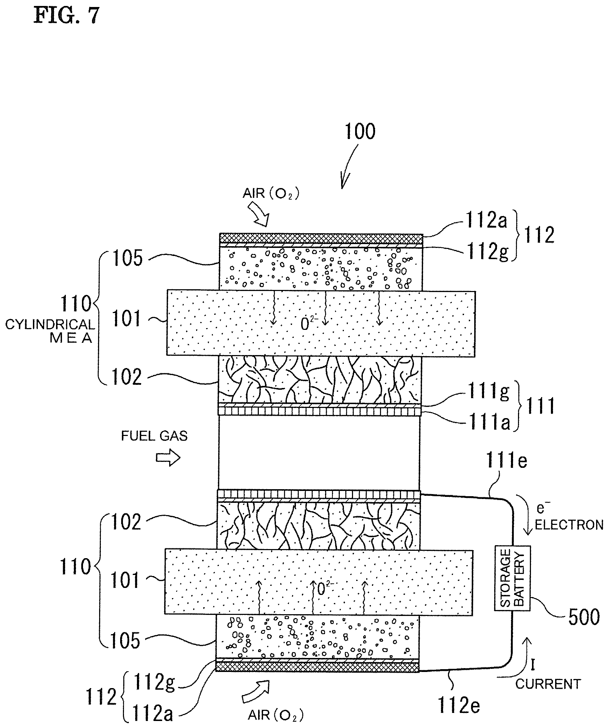

Figure 7 schematically illustrates functions of main portions in the case where an oxygen-ion-conductive solid electrolyte is employed for the solid electrolyte layer 101. A fuel gas containing hydrogen is introduced through the gas inlet 107 into the highly airtight inner cylinder of the cylindrical MEA 110, that is, the space where the anode-side current collector 111 is disposed.

The fuel gas passes through pores of the Ni mesh sheet 111a and the porous silver-paste-coated layer 111g and comes into contact with the first electrode layer (anode electrode) 102 to cause the following reaction.

(Anode reaction): H₂ + O²⁻ → H₂O + 2e⁻

The oxygen ions are generated in the second electrode layer (cathode electrode) 105 and are moved through the solid electrolyte layer 101 toward the first electrode layer (anode electrode) 102. The H₂O is discharged as an exhaust gas through the gas outlet 108.

In the second electrode layer (cathode electrode) 105, oxygen in the air is ionized in the following manner.

(Cathode reaction): 1/2O₂ + 2e⁻ → O²⁻

As described above, the O²⁻ is moved through the solid electrolyte layer 101 to the anode electrode layer 102.

As a result of the electrochemical reaction, electric power is generated; a potential difference is generated between the first electrode layer (anode electrode) 102 and the second electrode layer (cathode electrode) 105; current I flows from the cathode-side current collector 112 to the anode-side current collector 111. By connecting the storage battery 500 or the like between the cathode-side current collector 112 and the anode-side current collector 111, electric power can be stored. Alternatively, instead of the storage battery, a load such as a heater (not shown) for heating the fuel cell may be connected and, as a result, electric power for the heater can be supplied.

### <Solid electrolyte layer>

As to the solid electrolyte layer 101, oxygen-ion-conductive solid electrolytes such as yttrium stabilized zirconia (YSZ), scandium stabilized zirconia (SSZ), and samarium-doped ceria (SDC) may be employed. Alternatively, yttrium-doped barium zirconate (BYZ), which is a proton-conductive electrolyte, may be used to provide a fuel cell.

### <First electrode layer (anode electrode)>

The first electrode layer (anode electrode) 102 according to the present embodiment can be formed of a sinter containing an oxygen-ion-conductive ceramic and metal chain particles that have oxide layers in the surfaces and serve as a catalyst. For example, as with the solid electrolyte layer 101, YSZ (yttrium stabilized zirconia), SSZ (scandium stabilized zirconia), SDC (samarium-doped ceria), or the like may be employed. The metal of the metal chain particles is preferably a metal containing Ni; the metal may contain Ni-Co, Co-Fe, Ni-Ru, Ni-W, or the like.

### <Second electrode layer (cathode electrode)>

As with the material forming the first electrode layer 102 (anode electrode), a ceramic sinter having oxygen-ion conductivity may be used to form the second electrode layer 105 (cathode electrode). To promote the oxygen decomposition reaction, a catalyst such as silver may be added. As in the first electrode layer 102, metal chain particles may be added. The second electrode layer 105 (cathode electrode) may be formed by the same process as in the first electrode layer 102 (anode electrode).

In a fuel cell having the above-described configuration, the cylindrical MEA is heated to a high temperature of 600°C to 1000°C. In addition, oxygen ions are generated in the second electrode layer (cathode electrode) 105 and also affect the current collector 112. Accordingly, the current collector 112 is required to have heat resistance that withstands the temperature and high oxidation resistance.

In the present embodiment, as the current collector 112 for the second electrode layer (cathode electrode) 105, the sheet-shaped porous current collector 112a having the above-described Ni-Sn alloy layer is employed. In the surface of the Ni-Sn alloy layer, a Sn oxide layer (SnO₂ layer) is formed in the high-temperature oxidizing atmosphere. The Sn oxide layer serves as a permeability barrier for oxygen ions and growth of the oxide film can be suppressed. The Sn oxide layer has a thickness of 10nm or more. Since the Sn oxide layer has conductivity to a degree, in the state in which the oxide film is formed, it functions as a current collector. Since the sheet-shaped porous current collector 112a has a three-dimensional network structure, it has a high mechanical strength at high temperatures and hence high durability can be ensured.

The scope of the present invention is not limited to the above-described embodiments. The embodiments disclosed herein are given by way of illustration in all respects and should not be understood as being limitative. The scope of the present invention is indicated by not the above-described meanings but by Claims and is intended to embrace all the modifications within the meaning and range of equivalency of the Claims.

### Industrial Applicability

A porous current collector can be provided that can be produced at a low cost, has high heat resistance and high oxidation resistance, has a required mechanical strength, and, in the case of being applied to a fuel cell operated at a high temperature, exhibits high durability.

### Reference Signs List

- 1:: porous current collector
- 1b:: continuous pore
- 10a:: shell portion (Ni-Sn alloy layer)
- 100:: fuel cell
- 101:: solid electrolyte layer
- 102:: first electrode layer (anode)
- 105:: second electrode layer (cathode)
- 112a:: sheet-shaped porous current collector (porous current collector)

## Claims

1. A porous current collector (1) for a solid oxide fuel cell (100) including a solid electrolyte layer (101), a first electrode layer (102) disposed on a side of the solid electrolyte layer (101), and a second electrode layer (105) disposed on another side of the solid electrolyte layer (101), the porous current collector (1) comprising:
continuous pores (1b) and a Ni-Sn alloy layer (10a) covering at least a surface of the porous current collector (1),
wherein a Sn content in the Ni-Sn alloy layer (10a) is 5% to 30% by weight.

2. The porous current collector (1) according to Claim 1, wherein the Ni-Sn alloy layer (10a) is formed by forming a Sn layer on a Ni layer and subsequently heating the Ni layer and the Sn layer to cause diffusion therebetween.

3. The porous current collector (1) according to any one of Claims 1 to 2, wherein the current collector (1) has a porosity of 50% to 98%; and when the current collector (1) is heated in an air atmosphere at 600°C or more and a load of 30 Kgf/cm² is subsequently applied to the current collector (1) at room temperature, variation in a thickness of the current collector is less than 30%.

4. The porous current collector (1) according to any one of Claims 1 to 3, wherein a Sn oxide film having a thickness of at least 10 nm and electric conductivity is formed in a surface of the alloy layer in an oxidizing atmosphere at a high temperature of 600°C or more.

5. The porous current collector (1) according to any one of Claims 1 to 4, comprising a skeleton including a shell portion including the Ni-Sn alloy layer (10a) at least in a surface of the shell portion, and a core portion including a hollow portion and/or a conductive material,
wherein the skeleton forms a three-dimensional network structure having an integrated continuous form.

6. A fuel cell (100) comprising the porous current collector (1) according to any one of Claims 1 to 5.

7. A method for producing a porous current collector (1) for a solid oxide fuel cell (100) including, at least in a surface, a Ni-Sn alloy layer (10a) in which a Sn content in the Ni-Sn alloy layer (10a) is 5% to 30% by weight, the method comprising:
a Ni-plated-layer formation step of forming a Ni-plated layer on a porous base;
a Sn-plated-layer formation step of forming a Sn-plated layer on the Ni-plated layer;
a base elimination step of eliminating the porous base in an atmosphere at least containing oxygen; and
a diffusion step of causing diffusion between the Ni-plated layer and the Sn-plated layer in a reducing atmosphere at a temperature of 300°C to 1100°C.

## Patentansprüche

1. Poröser Stromsammler (1) für eine Festoxidbrennstoffzelle (100), welche eine Festelektrolytschicht (101), eine erste Elektrodenschicht (102) angeordnet auf einer Seite der Festelektrolytschicht (101), und eine zweite Elektrodenschicht (105) angeordnet auf einer anderen Seite der Festelektrolytschicht (101), enthält, wobei der poröse Stromsammler (1) folgendes umfasst:
durchgehende Poren (1b) und eine Ni-Sn Legierungsschicht (10a), welche mindestens eine Oberfläche des porösen Stromsammlers (1) bedeckt,
wobei der Sn-Gehalt in der Ni-Sn Legierungsschicht (10a) 5 Gew-% bis 30 Gew-% beträgt.

2. Poröser Stromsammler (1) gemäß Anspruch 1, wobei die Ni-Sn Legierungsschicht (10a) durch Bilden einer Sn-Schicht auf einer Ni-Schicht und anschließendes Heizen der Ni-Schicht und der Sn-Schicht, zum Auslösen der Diffusion zwischen diesen, gebildet wird.

3. Poröser Stromsammler (1) gemäß einem der Ansprüche 1 bis 2, wobei der Stromsammler (1) eine Porosität von 50 % bis 98% aufweist; und wobei, wenn der Stromsammler (1) in einer Luftatmosphäre auf 600°C oder mehr erhitzt wird und anschließend eine Last von 30 Kgf/cm² an den Stromsammler (1) bei Raumtemperatur angelegt wird, die Veränderung der Dicke des Stromsammlers weniger als 30% beträgt.

4. Poröser Stromsammler (1) gemäß einem der Ansprüche 1 bis 3, wobei ein Sn-Oxidfilm mit einer Dicke von mindestens 10 nm und einer elektrischen Leitfähigkeit innerhalb einer Oberfläche der Legierungsschicht unter einer oxidierenden Atmosphäre bei einer Temperatur von 600°C oder höher gebildet wird.

5. Poröser Stromsammler (1) gemäß einem der Ansprüche 1 bis 4, umfassend ein Skelett, das ein Hüllenabschnitt, mit der Ni-Sn Legierungsschicht (10a) in mindestens einer Oberfläche des Hüllenabschnitt und ein Kernabschnitt, mit einem hohlen Abschnitt und/oder einem leitenden Material enthält,
wobei das Skelett eine dreidimensionale Netzwerkstruktur mit einer einheitlichen durchgehenden Form bildet.

6. Brennstoffzelle (100), welche den porösen Stromsammler (1) gemäß einem der Ansprüche 1 bis 5 umfasst.

7. Verfahren zur Herstellung eines porösen Stromsammlers (1) für eine Festoxidbrennstoffzelle (100), die in mindestens einer Oberfläche, eine Ni-Sn Legierungsschicht (10a) mit einem Sn-Anteil in der Ni-Sn Legierungsschicht (10a) von 5 Gew-% bis 30 Gew-%, enthält, wobei das Verfahren folgendes umfasst:
einen Schritt zur Bildung einer abgeschiedenen Ni-Schicht, welcher eine abgeschiedene Ni-Schicht über eine poröse Basis bildet;
einen Schritt zur Bildung einer abgeschiedenen Sn-Schicht, welcher eine abgeschiedenen Sn-Schicht über die abgeschiedenen Ni-Schicht bildet;
einen Schritt zur Entfernung der Basis, welcher die poröse Basis unter einer mindestens Sauerstoff enthaltenden Atmosphäre entfernt; und
einen Diffusionsschritt, welcher die Diffusion zwischen der abgeschiedenen Ni-Schicht und der abgeschiedenen Sn-Schicht unter einer reduzierenden Atmosphäre bei einer Temperatur von 300°C bis 1100°C auslöst.

## Revendications

1. Collecteur de courant poreux (1) pour une pile à combustible à oxyde solide (100) comprenant une couche d'électrolyte solide (101), une première couche d'électrode (102) disposée sur un côté de la couche d'électrolyte solide (101), et une seconde couche d'électrode (105) disposée sur un autre côté de la couche d'électrolyte solide (101), le collecteur de courant poreux (1) comprenant :
des pores continus (1b) et une couche d'alliage Ni-Sn (10a) recouvrant au moins une surface du collecteur de courant poreux (1) ;
dans lequel la teneur en Sn de la couche d'alliage Ni-Sn (10a) est de 5 % à 30 % en poids.

2. Collecteur de courant poreux (1) selon la revendication 1, dans lequel la couche d'alliage Ni-Sn (10a) est réalisée par la formation d'une couche de Sn sur une couche de Ni et par chauffage ultérieur de la couche de Ni et de la couche de Sn pour provoquer une diffusion entre elles.

3. Collecteur de courant poreux (1) selon l'une quelconque des revendications 1 à 2, dans lequel le collecteur de courant (1) possède une porosité de 50 % à 98 % ; et lorsque le collecteur de courant (1) est chauffé dans une atmosphère d'air à 600°C ou plus et lorsqu'une charge de 30 Kgf/cm² est appliquée par la suite sur le collecteur de courant (1) à température ambiante, une variation de l'épaisseur du collecteur de courant est inférieure à 30 %.

4. Collecteur de courant poreux (1) selon l'une quelconque des revendications 1 à 3, dans lequel un film d'oxyde de Sn possédant une épaisseur d'au moins 10 nm et une conductivité électrique est formé dans une surface de la couche d'alliage dans une atmosphère oxydante à une température élevée de 600°C ou plus.

5. Collecteur de courant poreux (1) selon l'une quelconque des revendications 1 à 4, comprenant un squelette englobant une portion faisant office d'enveloppe comprenant la couche d'alliage Ni-Sn (10a) au moins dans une surface de la portion faisant office d'enveloppe, et une portion centrale comprenant une portion creuse et/ou une matière conductrice ;
dans lequel le squelette forme une structure de réseau en trois dimensions possédant une forme continue intégrée.

6. Pile à combustible (100) comprenant le collecteur de courant poreux (1) selon l'une quelconque des revendications 1 à 5.

7. Procédé pour la production d'un collecteur de courant poreux (1) pour une pile à combustible à oxyde solide (100) comprenant, au moins dans une surface, une couche d'alliage Ni-Sn (10a) dans laquelle la teneur en Sn de la couche d'alliage Ni-Sn (10a) est de 5 % à 30 % en poids, le procédé comprenant :
une étape de formation d'une couche plaquée au Ni pour la formation d'une couche plaquée au Ni sur une base poreuse ;
une étape de formation d'une couche plaquée au Sn pour la formation d'une couche plaquée au Sn sur la couche plaquée au Ni ;
une étape d'élimination de base pour l'élimination de la base poreuse dans une atmosphère contenant au moins de l'oxygène ; et
une étape de diffusion pour obtenir une diffusion entre la couche plaquée au Ni et la couche plaquée au Sn dans une atmosphère réductrice à une température de 300°C à 1100°C.
